# EUROPÄISCHE PATENTSCHRIFT

(11) **EP 1 399 261 B1**
(45) Veröffentlichungstag und Bekanntmachung des Hinweises auf die Patenterteilung: **07.06.2006**
(21) Anmeldenummer: 02738162.3
(22) Anmeldetag: 12.06.2002
(51) Int. Cl.: B01L 3/02

(54) **VERFAHREN UND VORRICHTUNG ZUR DOSIERUNG FLUIDER MEDIEN**
METHOD AND DEVICE FOR DOSING FLUID MEDIA
PROCEDE ET DISPOSITIF DE DOSAGE DE FLUIDES

(30) Priorität: 18.06.2001 DE 10129243
(43) Veröffentlichungstag der Anmeldung: 24.03.2004
(73) Patentinhaber: Fraunhofer-Gesellschaft zur Förderung der angewandten Forschung e.V., 80636 München (DE)
(72) Erfinder: ZIMMERMANN, Heiko, 66386 St. Ingbert (DE); HAGEDORN, Rolf, 13057 Berlin (DE); FUHR, Günter, 13187 Berlin (DE)
(74) Vertreter: Hertz, Oliver
(86) Internationale Anmeldenummer: PCT/EP2002/006470
(87) Internationale Veröffentlichungsnummer: WO 2002/102515

(56) Entgegenhaltungen:
- DE-A- 19 654 321
- DE-C- 955 004
- FR-A- 2 605 249
- US-A- 5 601 980

## Beschreibung

Die Erfindung betrifft Verfahren zur Dosierung fluider Medien, insbesondere Dosierverfahren zur Übertragung von fluiden, tropfenförmigen Proben entsprechend vorbestimmten stofflichen und/oder geometrischen Bedingungen auf ein Target, Verfahren zur stofflichen Modifizierung tropfenförmiger Proben und Verfahren zur Modifizierung von Substratoberflächen durch Zuführung fluider, tropfenförmiger Medien entsprechend einem bestimmten geometrischen Muster. Die Erfindung betrifft auch Vorrichtungen zur Umsetzung der genannten Verfahren.

Das gezielte Erzeugen, Verteilen und Anordnen kleiner Flüssigkeitsvolumina besitzt eine große praktische Bedeutung insbesondere in der Biotechnologie und Medizin. Beispielsweise zum Aufbau von Test-Assays für Screening-Verfahren in der pharmazeutischen Forschung besteht ein Interesse an der definierten Ablage fluider Proben auf Substraten. Entsprechend wird auch beim Aufbau von Probenbanken, insbesondere Kryobanken, eine Technik benötigt, mit der z. B. Zellsuspensionen definiert dosiert und auf einem Substrat oder in einer Matrix von Kryobehältern angeordnet werden können. Die Proben besitzen typischerweise ein Volumen im pl- bis pl-Bereich. Daher wird bei den interessierenden Verfahren auch von Mikrodosierung gesprochen.

Bei allgemein bekannten, herkömmlichen Verfahren zur Mikrodosierung werden als Einrichtungen zur Erzeugung von tropfenförmigen Proben bspw. Kapillaren, Nadelspitzen oder Mikropumpen verwendet. Diese Einrichtungen besitzen eine Doppelfunktion als Tropfengenerator und als Dosiereinheit. Die Probentropfen werden mit einer definierten Größe und Zusammensetzung vom Tropfengenerator entlang einer bestimmten freien Bewegungsbahn zu einem Target, z. B. Substrat, übertragen. Nach Verlassen des Tropfengenerators bleiben die Proben bis zum Auftreffen auf dem Target in der Regel unbeeinflusst. Um bestimmte Targetpositionen zu belegen, sind der Tropfengenerator und das Target relativ zueinander mechanisch verfahrbar.

Die herkömmlichen Mikrodosierverfahren besitzen eine Reihe von Nachteilen, durch die ihre Verwendbarkeit eingeschränkt ist. Mit einzelnen Tropfengeneratoren sind nur beschränkte Dosiergeschwindigkeiten erreichbar. Wenn auf einem Substrat einige tausend Proben abzulegen sind, so wird für die serielle Verteilung mit einem einzelnen Tropfengenerator so viel Zeit benötigt, dass ggf. eine Veränderung der ersten Probe aufgetreten ist, bis die letzte Probe abgelegt wird. Es sind zwar Tropfengeneratoren zur simultanen Erzeugung einer Vielzahl von Probentropfen bekannt (z. B. Multikapillarsysteme), mit denen die Geschwindigkeit erhöht werden kann. Diese Einrichtungen besitzen jedoch einen komplizierten Aufbau und eine relativ hohe Störanfälligkeit. Eine Anpassung an verschiedene Dosierbedingungen ist nur durch einen Umbau des Tropfengenerators möglich.

Ein weiterer Nachteil herkömmlicher Tropfengeneratoren besteht in deren Beschränkung der erzeugten Proben auf vorbestimmte Mindestvolumina, die je nach Generatorfunktion nicht unterschritten werden können. Bei der Entwicklung neuer Screening-Systeme wird aber ständig eine Verringerung der Probenvolumina gefordert, bspw. um die Proben dichter auf Substraten anzuordnen oder um Reagenzien zu sparen.

Aerosolgeneratoren zur Herstellung feinster Aerosoltropfen sind in DE 196 54 321 und FR 2 605 249 beschrieben. US 5 601 980 offenbart ein Verfahren zur Anordnung biologischer Proben aus Substraten.

Die Aufgabe der Erfindung besteht in der Bereitstellung eines verbesserten Dosierverfahrens, mit dem Nachteile der herkömmlichen Techniken überwunden werden können. Das erfindungsgemäße Dosierverfahren soll insbesondere eine genaue und reproduzierbare Dosierung fluider Medien ermöglichen. Die Aufgabe der Erfindung ist es auch, eine verbesserte Dosiereinrichtung zur Umsetzung des Verfahrens bereit zu stellen.

Diese Aufgaben werden mit einem Dosierverfahren und einer Dosiereinrichtung mit den Merkmalen gemäß den Patentansprüchen 1 und 10 gelöst. Vorteilhafte Ausführungsformen und Anwendungen der Erfindung ergeben sich aus den abhängigen Ansprüchen.

Die Grundidee der Erfindung besteht darin, mindestens einen Tropfen eines fluiden Mediums, der mit einem Tropfengenerator erzeugt worden ist und auf einer freien Flugbahn bewegt wird, durch eine Wechselwirkung mit einer in der Flugbahn positionierten Maskierungseinrichtung, die mindestens ein Strukturelement aufweist, zu modifizieren, so dass mindestens ein Teiltropfen vom ursprünglich erzeugten Tropfen abgelöst wird. Bei der erfindungsgemäßen Dosierung wird aus einem ursprünglich erzeugten Tropfen mindestens ein Teiltropfen oder eine Portion abgelöst und je nach den Eigenschaften der Maskierungseinrichtung, die zwischen dem Tropfengenerator und dem Target angeordnet ist, hinsichtlich der Impulseigenschaften und ggf. der stofflichen Zusammensetzung modifiziert. Unter Dosierung wird hier allgemein die Bereitstellung von tropfenförmigen Flüssigkeitsproben verstanden, die sich durch eine bestimmte Masse (oder ein bestimmtes Volumen), eine bestimmte Geschwindigkeit, eine bestimmte Bewegungsrichtung, eine bestimmte Position und/oder eine bestimmte stoffliche Zusammensetzung auszeichnen.

Gemäß einer bevorzugten Ausführungsform der Erfindung wird mindestens ein Tropfen jeweils in eine Vielzahl von Teiltropfen aufgeteilt. Hierzu besitzt das Strukturelement der Maskierungseinrichtung die Gestalt einer Loch- oder Gittermaske. Ein ursprünglich mit einem Tropfengenerator erzeugter Tropfen wird an der Maskierungseinrichtung in eine Vielzahl von Teiltropfen umgewandelt, die je nach Gestalt des Strukturelementes eine bestimmte Verteilung und Bewegungsrichtung besitzen. Das Strukturelement der Maskierungseinrichtung ist vorzugsweise mit Abstand vom Target angeordnet und relativ zum Target verfahrbar. Dies eröffnet vorteilhafterweise einen zusätzlichen Freiheitsgrad bei der Einstellung der Dosierparameter und ggf. den Wechsel des Strukturelementes im Lauf eines Dosierverfahrens.

Das mindestens eine Strukturelement der erfindungsgemäß verwendeten Maskierungseinrichtung bildet eine mechanische Maskierung der Flugbahn des mindestens einen erzeugten Tropfens. Allgemein besitzt das Strukturelement eine bestimmte geometrische Anordnung von Maskenöffnungen, die jeweils durch Randkanten begrenzt sind. Die Maskenöffnungen sind als ebene oder als gewölbte Maske angeordnet. Die Öffnungsformen und ggf. die Faltung oder Wölbung der Maske ermöglichen die Einstellung beliebiger Probenvolumina und Muster der Teiltropfen, die die Maskenöffnungen passieren. Gemäß einer besonderen Ausführungsform der Erfindung kann die Maskierungseinrichtung selbst mit mindestens einer Substanz beladen sein, mit der die Teiltropfen bei Erzeugung an dem mindestens einen Strukturelement beladen werden. Ausgehend von bspw. einem erzeugten Tropfen, der sich vom Tropfengenerator durch die Maskierungseinrichtung bewegt, wird eine Vielzahl von, Tropfen mit der mindestens einen Zusatzsubstanz beladen und danach auf dem Target abgelegt. Da oben genannte Zeitproblem bei der Substratbeschickung wird sowohl in Bezug auf die parallele Ablage einer Vielzahl von Teiltropfen als auch hinsichtlich der Beladung mit einer Zusatzsubstanz gelöst.

Erfindungsgemäß können entlang der Bewegungsbahn mehrere Maskierungseinrichtungen vorgesehen sein, wobei die an einer Maskierungseinrichtung erzeugten Teiltropfen an der in Bewegungsrichtung folgenden Maskierungseinrichtung einer weiteren Dosierung, insbesondere Teiltropfenbildung, Umlenkung und/oder stofflichen Modifizierung, unterzogen werden.

Gegenstand der Erfindung ist auch eine Dosiervorrichtung zur Umsetzung des neuen Dosierverfahrens, die sich insbesondere durch einen Tropfengenerator zur Erzeugung von Tropfen und eine Maskierungseinrichtung mit mindestens einem Strukturelement zur Modifizierung und Mikrodosierung der Tropfen auszeichnet.

Die Erfindung besitzt die folgenden Vorteile. Das Mikrodosierverfahren ermöglicht die gleichzeitige Verteilung einer Substanz (z. B. Suspension oder Lösung einer zu untersuchenden Probe) auf eine Vielzahl von Positionen auf einem Traget. Die Proben werden punktgenau platziert. Die Maskierungseinrichtung und insbesondere das Strukturelement lassen sich anwendungsabhängig ein- oder mehrfach verwenden. Das Strukturelement ist einfach herstellbar und ermöglicht einen problemlosen Austausch. Materialien, wie z. B. Düsen eines Tropfengenerators, müssen nicht gesondert gereinigt werden. Die Dosierung besitzt eine hohe Geschwindigkeit, da die Teiltropfen gleichzeitig erzeugt werden. Von Vorteil insbesondere im biomedizinischen Bereich ist die Tatsache, dass zur Herstellung strukturiert beschickter Substrate keinerlei Substratvorbehandlung notwendig ist. Das erfindungsgemäße Verfahren kann ohne Weiteres in Prozessabläufe implementiert werden, die die sog. GMP-(Good Manufactoring Practise)- und GLP-(Good Laboratory Practise)-Bedingungen erfüllen. Ein weiterer Vorteil der Erfindung besteht in der Möglichkeit, geometrisch und stofflich ungleichförmige Masken zu bilden, so dass das Target inhomogen mit Größen- oder Stoffgradienten belanden wird.

Die Erfindung ist vielseitig anwendbar. Es können Proben auf Substrate aufgebracht und/oder Substratoberflächen modifiziert werden (z. B. strukturierte oberflächliche Gelvernetzung mit erfindungsgemäß verteilten Salzlösungen). Neben dem Einsatz in der Biotechnologie, Gentechnik und Biomedizin bestehen auch Anwendungen bspw. in der Drucktechnik. Mit erfindungsgemäß verwendeten Maskierungseinrichtungen lassen sich die Druckparameter, insbesondere Druckauflösung, eines Tintenstrahldruckers variieren.

Weitere Einzelheiten und Vorteile der Erfindung ergeben sich aus der Beschreibung der beigefügten Zeichnungen. Es zeigen:
- Figuren 1a, b: schematische Darstellungen erfindungsgemäßer Dosiereinrichtungen,
- Figuren 2a bis c: beispielhafte Illustrationen der Ablage von fluiden Medien auf Targets mit verschiedenen Mustern,
- Figur 3: eine weitere Illustration der erfindungsgemäßen Erzeugung von Teiltropfen an einer Lochmaske,
- Figur 4: eine Illustration verschiedener Funktionen erfindungsgemäß verwendeter Strukturelemente,
- Figur 5: eine Illustration der Beladung einer Maskierungseinrichtung mit Zusatzsubstanzen,
- Figur 6: eine beispielhafte Illustration einer erfindungsgemäß verwendeten Maskierungseinrichtung mit einem gewölbten Strukturelement, und
- Figur 7: eine Illustration einer Betriebsweise der erfindungsgemäßen Dosiervorrichtung mit bewegter Maskierungseinrichtung.

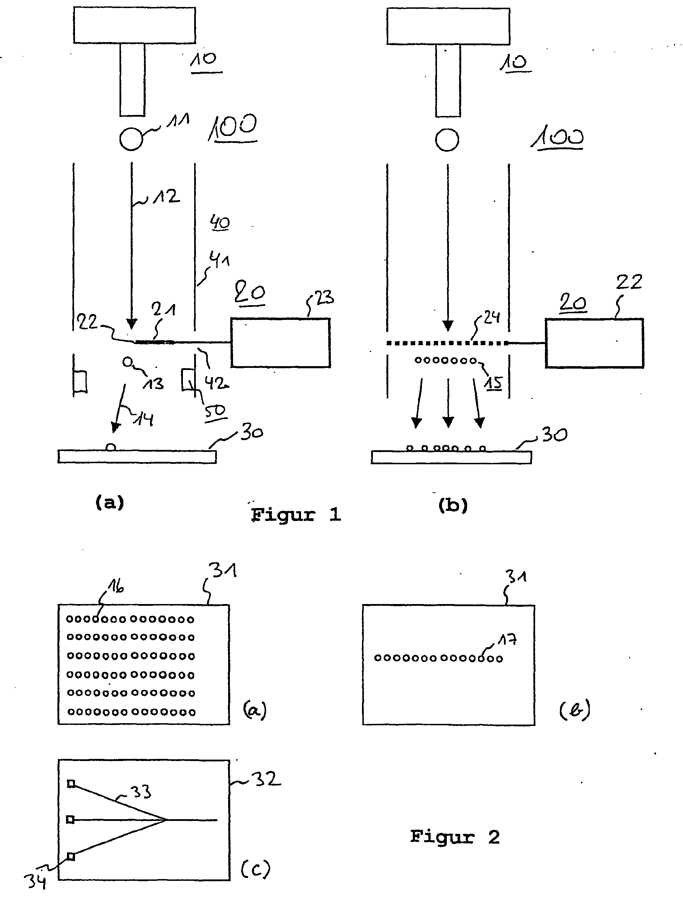

Figur 1 zeigt in schematischer Seitenansicht den Aufbau einer erfindungsgemäßen Dosiereinrichtung 100 mit einem Tropfengenerator 10, einer Maskierungseinrichtung 20 und einem Target 30. Der Tropfengenerator 10 umfasst allgemein eine Einrichtung, aus der mindestens ein Tropfen 11 entlang einer bestimmten Flugbahn 12 zum Target 30 austritt. Der Tropfengenerator 10 kann bspw. durch eine der an sich bekannten Dosiereinheiten gebildet werden, bei denen Tropfen durch eine Kapillare oder mit einer Pipette oder einer Mikropumpe oder dergleichen abgegeben werden. Der Tropfengenerator kann auch zur gleichzeitigen Abgabe einer Vielzahl von Tropfen, wie mit einem Multikapillarsystem, eingerichtet sein, wobei dann die erfindungsgemäße Dosierung mit einem oder mehreren der abgegebenen Tropfen durchgeführt wird. Anwendungsabhängig kann der Tropfengenerator zur Abgabe von Einzeltropfen oder zur Abgabe von Einzeltropfenfolgen (gepulste Tropfenerzeugung, z. B. Bubble-Jet-Verfahren) ausgelegt sein. Das Target 30 ist allgemein ein Körper mit einer freiliegenden Festkörperoberfläche, zu der mindestens ein Teiltropfen übertragen werden soll. Das Target 30 ist vorzugsweise ein planares Substrat (z. B. Glas, Kunststoff, Folie, Halbleitermaterial oder dergleichen), das eine glatte oder strukturierte Oberfläche aufweist. Die Oberfläche des Targets 30 kann insbesondere mit Einrichtungen zur Manipulierung, Analyse oder Detektion fluider Proben, wie sie bspw. aus der fluidischen Mikrosystemtechnik bekannt sind, ausgestattet sein.

Die Maskierungseinrichtung 20 umfasst mindestens ein Strukturelement 21, 24, das mit mindestens einer Randkante 22 in die Flugbahn 12 des Tropfens 11 ragt, und eine Positioniereinrichtung 23, mit der das mindestens eine Strukturelement 21, 24 relativ zur Flugbahn 12 und/oder relativ zum Target 30 in allen drei Raumrichtungen einstellbar oder verfahrbar ist. Die Teilbilder (a) und (b) von Figur 1 illustrieren zwei Grundformen erfindungsgemäß verwendeter Strukturelemente. Das Strukturelement 21 gemäß Teilbild (a) ist zur Erzeugung von einem Teiltropfen 13 aus dem ursprünglich erzeugten Tropfen 11 eingerichtet. Der Teiltropfen 13 unterscheidet sich vom Tropfen 11 in Bezug auf seine Größe und Bewegungsrichtung. Durch die Kollision mit der in die Flugbahn 12 ragenden äußeren Randkante 22 des Strukturelementes 21 wird der Tropfen 11 in den Teiltropfen 13 und einen (nicht dargestellten) Rest zerteilt, wobei eine Ablenkung des Teiltropfens 13 auf eine neue Richtung (siehe Pfeil 14) erfolgt. Alternativ kann das Strukturelement 24 gemäß Teilbild (b) eine Vielzahl von Öffnungen jeweils mit Randkanten aufweisen, die in die Bewegungsbahn 12 des Tropfens 11 ragen. In diesem Fall werden mehrere an den Randkanten abgerissene und durch die Öffnungen durchtretende Teiltropfen 15 erzeugt, die ggf. wiederum mit einer Ablenkung gegenüber der ursprünglichen Flugbahn 12 zum Target 30 übertragen werden.

Eine erfindungsgemäße Dosiereinrichtung kann des Weiteren mit einer Abschirmeinrichtung 40 ausgestattet sein, die den Raumbereich, in dem sich der Tropfen 11 zur Maskierungseinrichtung 20 bewegt, und die Teiltropfen 13, 15 erzeugt werden, von der Umgebung abschirmt. Es ist bspw. ein rohrförmiges Gehäuse 41 vorgesehen, das sich entlang der Flugbahn 12 erstreckt und eine seitliche Öffnung 42 aufweist, durch die das mindestens eine Strukturelement 21, 24 in die Flugbahn ragt. Die Dosiereinrichtung 100 kann des Weiteren, insbesondere in Tropfenbewegungsrichtung der Maskierungseinrichtung nachgeordnet, zusätzliche Detektor- und/oder Modulatoreinrichtungen 50 aufweisen, mit denen die Erzeugung der Teiltropfen 13, 15 erfasst oder eine weitere Modulation der Bewegungsbahnen der Teiltropfen z. B. mit elektrischen Feldern durchgeführt wird (siehe unten).

In der weiteren Beschreibung wird auf die bevorzugte Verwendung eines Strukturelementes 24 gemäß Figur 1b Bezug genommen, das durch eine flächige Maske mit einer Vielzahl von zweidimensional oder reihenförmig angeordneten Maskenöffnungen gebildet wird. Das Strukturelement 24 wird auch als Lochmaske oder Gittermaske bezeichnet.

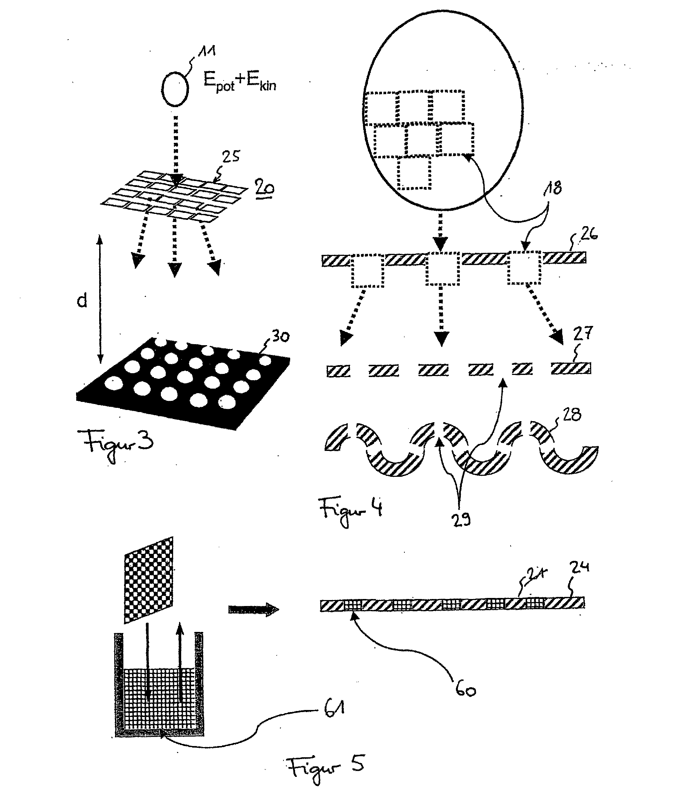

Die Loch- oder Gittermaske besteht aus einer dünnen, planaren oder gewölbten Platte oder Scheibe, in der die Maskenöffnungen als durchgehende Löcher gebildet sind. Die geometrische Form der Maskenöffnungen (z. B. rund, eckig), die Anzahl und Anordnung der Maskenöffnungen (regelmäßig, flächig, reihenförmig oder unregelmäßig) und die Abstände der Maskenöffnungen werden anwendungsabhängig gewählt. Allgemein ist das Innenmaß der Maskenöffnungen wesentlich kleiner als der Durchmesser des ursprünglich erzeugten Tropfens 11. Der Quotient aus Tropfendurchmesser und Innenmaß der Maskenöffnungen wird bspw. im Bereich von ca. 10 bis 500, z. B. 100 gewählt. Je kleiner der Quotient ist, desto mehr Teiltropfen 15 werden beim erfindungsgemäßen Dosierverfahren erzeugt und in definierter Weise zum Target 30 übertragen. Die Abstände zwischen den Maskenöffnungen können durch streifenförmige Stege (siehe Figur 3) gebildet werden, deren Breite bis zu einer Drahtform reduziert werden kann (siehe Figur 6), so dass die Abstände der Maskenöffnungen ggf. geringer als die Innenmaße der Maskenöffnungen sind. Die Dicke der Maske oder wenigstens der Randkante des Strukturelementes wird vorzugsweise im Bereich von wenigen mm bis 100 µm gewählt. Die Untergrenze kann anwendungsabhängig auch geringer sein, falls die Maske für die jeweils aufgebrachten Tropfen genügend stabil ist.

Beim Aufbau gemäß Figur 1b wird der Tropfengenerator 10 bspw. durch eine Mikropipette gebildet, die Tropfen mit einem Volumen von ca. 13 µl abgibt. Die Tropfen 11 fallen unter der Wirkung der Gravitation entlang einer geraden Flugbahn 12 über eine Strecke von ca. 50 cm zum gitterförmigen Strukturelement 24. Die Maskenöffnungen des Strukturelementes 24 sind Quadrate mit einer Seitenlänge von 100 µm. Am Strukturelement 24 wird der Tropfen 11 in eine Vielzahl von Teiltropfen 15 (z. B. einige 10 bis einige 10³ Teiltropfen oder mehr) zerlegt, die entsprechend der Anordnung der Maskenöffnungen im Strukturelement 24 zum Target 30 übertragen werden und dort ein Tropfenmuster bilden, dass zum Muster der Maskenöffnungen identisch oder geometrisch ähnlich (ggf. aufgeweitet oder fokussiert) ist. Der senkrechte Abstand zwischen dem Strukturelement 24 und dem Target 30 liegt bspw. im mm- bis cm-Bereich.

In Figur 2 sind in schematischer Draufsicht verschiedene Ablageformen der Teiltropfen illustriert. Gemäß Figur 2a erfolgt eine matrixartige Ablage der Proben 16 in geraden Reihen und Spalten auf dem planaren Substrat 31, wie es bspw. für Test-Assays von Interesse ist. Zur Verteilung eines Zellsuspensionstropfens auf einem Substrat mit einem geordneten Muster gemäß Figur 2a durchläuft bspw. ein Ausgangstropfen mit ca. 5 10² Zellen das Strukturelement der Maskierungseinrichtung.

Es erfolgt eine Verteilung auf eine Vielzahl von Proben (Teiltropfen) mit durchschnittlich zwei Zellen pro Probe. Alternativ kann auch eine lineare Aufreihung von Proben 17 gemäß Figur 2b vorgesehen sein. Diese Ausführungsform der Erfindung wird mit besonderem Vorteil bei Untersuchungen von Zellkultivierungen oder Zellspuren auf Substraten angewendet. Mit der erfindungsgemäßen Dosiereinrichtung werden Teiltropfen, die im Mittel jeweils eine in einer Nährlösung suspendierte biologische Zelle enthalten, in einer Reihe oder in einer anderweitigen geometrischen Anordnung auf das Substrat 31 aufgebracht. Den Zellen wird mit der erfindungsgemäßen Dosierung eine definierte Startposition gegeben. Für Kultivierungs- oder Spurenbildungszwecke kann auf dem Substrat 31 eine Strukturierung zur Förderung der jeweils zu beobachtenden Prozesse in bestimmten Substratbereichen vorgesehen sein, wie es an sich von Zellspuruntersuchungen bekannt ist. Als Target kann gemäß Figur 2c auch ein freiliegendes fluidisches Mikrosystem 32 verwendet werden. In der Chipoberfläche des Mikrosystems 32 sind in an sich bekannter Weise Fluidkanäle 33 gebildet. Mit einer geeignet geformten und angeordneten Maskierungseinrichtung werden Proben in bestimmte Startreservoire 34 des Mikrosystems 32 platziert und von dort durch die Kanäle 33 gefördert.

Im Folgenden wird unter Bezug auf die schematische Illustration in Figur 3 die erfindungsgemäße Dosierung mit weiteren Einzelheiten erläutert. Figur 3 zeigt eine erfindungsgemäße Dosiereinrichtung mit einer Maskierungseinrichtung 20 und einem Target 30. Der Tropfen 11, der aus Übersichtlichkeitsgründen stark verkleinert dargestellt ist, fällt auf das Strukturelement 25 der Maskierungseinrichtung 20. Die Energie des Tropfens 11 setzt sich aus seiner potentiellen Energie und seiner kinetischen Energie zusammen. Je größer der bspw. im freien Fall durchlaufene Abstand der Maskierungseinrichtung von einem Tropfengenerator oder je kleiner der Abstand d der Maskierungseinrichtung vom Target ist, desto mehr potentielle Energie wird in kinetische Energie umgewandelt. Beim Aufprall des Tropfens 11 auf die Maskierungseinrichtung 20 wird der Impuls der aus der Maskierungseinrichtung 20 austretenden Teiltropfen relativ zum Impuls des ursprünglichen Tropfens 11 verändert. Es ändern sich sowohl die Volumina der Teiltropfen, d. h. deren Massen, als auch die Geschwindigkeiten in Bezug auf deren Betrag und ggf. auch Richtung. Die Erfinder haben festgestellt, dass unter gegebenen geometrischen Bedingungen der relativen Anordnungen der Maskierungseinrichtung 20 und des Targets 30 und der Maskenöffnungen im Strukturelement 25 der Maskierungseinrichtung 20 bei gegebenen Tropfeneigenschaften überraschenderweise eine definierte und reproduzierbare Änderung des Impulses und Verteilung des Tropfens in Teiltropfen auftritt. Mit der Maskierungseinrichtung 20 können die Teiltropfen definiert geformt und geführt werden. Eine weitere Variationsmöglichkeit ergibt sich aus der Beweglichkeit der Maskierungseinrichtung 20 relativ zum Target 30. Bei Änderung des Abstandes d kann die Anordnung der Teiltropfen auf dem Target 30 in definierter Weise verändert werden. Schließlich ist es auch möglich, die Impulsänderung durch Variation der Maske herbei zu führen. Das Strukturelement der Maskierungseinrichtung kann bspw. makroskopisch gewölbt sein (siehe Figur 4, unten; Figur 6). Ferner kann eine Variabilität der Maskenöffnungen vorgesehen sein, indem bspw. die Stege zwischen den Maskenöffnungen mit Lamellen in ihrer Breite veränderlich gebildet sind.

Gemäß einer alternativen Ausführungsform der Erfindung ist es möglich, dass eine Maskierungseinrichtung mit in Bewegungsrichtung der Tropfen mehreren, hintereinander angeordneten Strukturelementen oder entsprechend mehrere hintereinander angeordnete Maskierungseinrichtungen mit jeweils einem Strukturelement vorgesehen sind (sog. Masken-Kaskade). Eine MaskenKaskade ist beispielhaft mit den Strukturelementen 26, 27 und 28 in Figur 4 illustriert. Der Tropfen 11 trifft auf die erste Maske. Es erfolgt die schematisch illustrierte Zerlegung des Tropfens 11 in die Teiltropfen 18, die auf die folgende Maske mit einer veränderten Geometrie (insbesondere veränderte Anordnung und/oder Größe der Maskenöffnungen 29) treffen.

Die in Figur 4 illustrierte unterste Maske 28 zeigt eine weitere Möglichkeit zu Beeinflussung der Richtung der erzeugten Teiltropfen. Durch eine Maskenwölbung in Bewegungsrichtung kann eine Aufweitung der von der Maskierungseinrichtung auf das Target projizierten Teiltropfenverteilung erreicht werden. Umgekehrt ist durch eine Wölbung entgegen der Bewegungsrichtung eine Fokussierung der Teiltropfenverteilung möglich. Schließlich kann auch wie dargestellt eine Wellen- oder Parabelform vorgesehen sein, mit der eine definierte Strukturierung der Teiltropfenverteilung auf dem Target gebildet wird.

Es ist ein besonderer Vorteil der Erfindung, dass insbesondere durch die Fokussierung der Teiltropfenverteilung fluide Medien mit kleinsten Volumen (z. B. weniger als 1 pl) auf engstem Raum (z. B. wenige µm) definiert abgelegt werden können. Derartige Probendichten sind mit herkömmlichen Dosiereinrichtungen nicht erreichbar.

Bei einer praktischen Gestaltung einer Masken-Kaskade können bspw. zwei nacheinander angeordnete Masken vorgesehen sein. Die erste Gittermaske dient der Verteilung eines ursprünglich vom Tropfengenerator erzeugten Tropfens in ein gleichmäßiges Feld von Teiltropfen (z. B. Matrixanordnung). Mit dem zweiten Gitter wird in dem Teiltropfenfeld ein Gradient erzeugt. Hierzu sind die Maskenöffnungen der zweiten Gittermaske nicht gleichförmig, sondern mit verschiedenen Innenmaßen der Maskenöffnungen gebildet. Beispielsweise kann eine Matrixanordnung der Maskenöffnungen in geraden Reihen und Spalten vorgesehen sein, wobei sich die Maskenöffnungen in Spalten- und Reihenrichtung jeweils schrittweise vergrößern oder verkleinern.

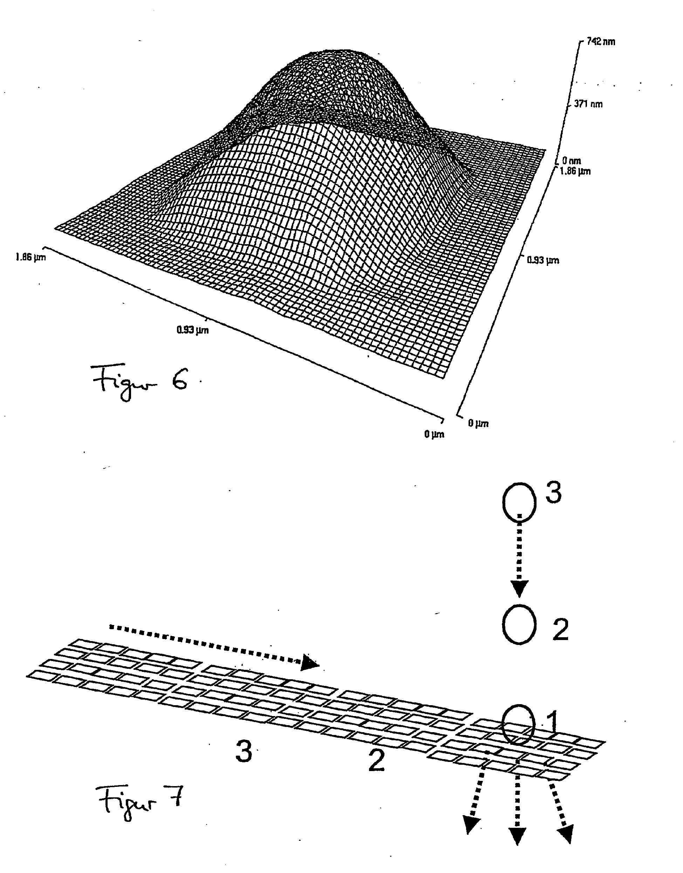

Die Teiltropfen können durch die Wechselwirkung mit der Maskierungseinrichtung auch in ihrer stofflichen Zusammensetzung modifiziert werden, wie in Figur 5 illustriert ist. Das Strukturelement 24 der Maskierungseinrichtung ist bspw. eine ebene Gittermaske wie in Figur 1b. In einzelnen oder allen Maskenöffnungen ist eine Zusatzsubstanz 60 angeordnet. Die Zusatzsubstanz 60 umfasst bspw. flüssige Reagenzien, die mit den Teiltropfen zur Reaktion gebracht werden sollen. Die Beladung des Strukturelementes 21 mit der Zusatzsubstanz 60 erfolgt vorzugsweise durch einfaches Eintauchen der Gittermaske in ein Vorratsgefäß 61. Unter der Wirkung der Adhäsionskräfte wird die Zusatzsubstanz 60 in den Maskenöffnungen gebunden, die hierzu typische Innenmaße im Bereich von einigen Millimetern bis einigen Mikrometern besitzen. Durch die in Figur 5 illustrierte Technik wird es möglich, an der Oberfläche der Teiltropfen Reaktionen ablaufen zu lassen, die erst unmittelbar vor Auftreffen der Teiltropfen auf dem Target stattfinden sollen.

Figur 6 illustriert beispielhaft die Gestaltung einer makroskopisch geformten Gittermaske mit einer Wölbung, die je nach Ausrichtung relativ zur Bewegungsrichtung der Tropfen der Fokussierung oder Aufweitung der Teiltropfenverteilung dient. Die makroskopische Formung der Gittermaske ermöglicht, dass alle vom ursprünglich eintreffenden Tropfen abgetrennten Teiltropfen einen anderen Drall erhalten. Für eine Vielzahl (z. B. 100) von Teiltropfen erfolgt gleichzeitig eine Teiltropfenspezifische Impulsänderung.

In Figur 7 ist die Verfahrbarkeit der Maskierungseinrichtung illustriert. Neben der Variation des Abstandes d vom Target (siehe Figur 3) zur Veränderung der Teiltropfenverteilung kann das Strukturelement der Maskierungseinrichtung auch lateral in einer Ebene parallel zur Ebene des Targets verschoben werden, bspw. um jeden eintreffenden Tropfen 1, 2 und 3 in einem anderen Maskenbereich 1, 2 und 3 zu zerlegen. Hierzu besitzt das Strukturelement der Maskierungseinrichtung die Form eines streifenförmigen Gitters, das während der Tropfenzufuhr durch die Flugbahn der vom Tropfengenerator erzeugten Tropfen gezogen wird.

Die Bewegung des Strukturelementes kann kontinuierlich erfolgen. Die Teiltropfen erhalten ggf. einen zusätzlichen Impuls in Bewegungsrichtung der Gittermaske, was jedoch bei der Platzierung auf dem Target berücksichtigt werden kann. Das Strukturelement kann auch anderweitig bewegt werden, bspw. um durch eine Rotationsbewegung den Teiltropfen einen zusätzlichen Drehimpuls relativ zu der durch die Flugbahn gebildeten Achse zu verleihen.

Die Trennung der Maskierungseinrichtung vom Target besitzt somit eine Reihe von Vorteilen, die sich aus der Variabilität des Abstandsparameters d (Variabilität der Projektion der Teiltropfenverteilung), der körperlichen Trennung von Strukturelement und Target (Vermeidung von Kontaminationen) und der lateralen Beweglichkeit des Strukturelementes (Zusatzimpulse) ergeben. Erfindungsgemäß kann vorgesehen sein, dass die Teiltropfen bei der Erzeugung am Strukturelement elektrisch aufgeladen werden. Mit Hilfe der in Figur 1a gezeigten Modulatoreinrichtung 50 kann eine weitere Variation der geladenen Teiltropfen unter Wirkung des äußeren elektrischen Feldes erfolgen.

Gemäß einer weiteren Abwandlung der Erfindung kann eine Verkippung des Strukturelementes der Maskierungseinrichtung relativ zur Flugbahn des ursprünglich erzeugten Tropfens und/oder relativ zum Target vorgesehen sein, um die Erzeugung der Teiltropfenimpulse und/oder die Aufbringung der Teiltropfenverteilung auf dem Target zu modifizieren.

## Patentansprüche

1. Dosierverfahren zur Mikrodosierung fluider Medien, bei dem mindestens ein Tropfen (11) mit einem Tropfengenerator (10) erzeugt und auf einer freien Flugbahn (12) bewegt wird, die auf ein Target (30) gerichtet ist, wobei der Tropfen (11) auf eine Maskierungseinrichtung (20) mit mindestens einem Strukturelement (21-28) trifft, das eine Randkante (22) aufweist,
**dadurch gekennzeichnet, dass**
der Tropfen (11) von dem Tropfengenerator (10) auf einer vorbestimmten Flugbahn (12) bewegt wird, und
durch eine Kollision des Tropfens (11) mit der Randkante (22) mindestens ein Teiltropfen (13, 15-18) abgelöst wird und der mindestens eine Teiltropfen auf das Target (30) übertragen wird.

2. Dosierverfahren gemäß Anspruch 1, bei dem mit der Maskierungseinrichtung (20) eine Ablenkung des mindestens einen Teiltropfens (13, 15-18) relativ zur ursprünglichen Flugbahn (12) des Tropfens (11) erfolgt.

3. Dosierverfahren gemäß Anspruch 1 oder 2, bei dem mit der Maskierungseinrichtung (20) die stoffliche Zusammensetzung des mindestens einen Teiltropfens (13, 15 - 18) relativ zur Zusammensetzung des Tropfens durch Aufnahme einer Zusatzsubstanz (60) am Strukturelement (24) der Maskierungseinrichtung (20) verändert wird.

4. Dosierverfahren gemäß einem der vorhergehenden Ansprüche, bei dem als Strukturelement (24, 26 - 28) eine Loch- oder Gittermaske verwendet wird und eine Aufteilung des Tropfens (11) in eine Vielzahl von Teiltropfen (15 - 18) erfolgt.

5. Dosierverfahren gemäß einem der vorhergehenden Ansprüche, bei dem in Bewegungsrichtung des Tropfens mehrere Strukturelemente (26 - 28) von mindestens einer Maskierungseinrichtung (20) angeordnet sind.

6. Dosierverfahren gemäß einem der vorhergehenden Ansprüche, bei dem das mindestens eine Strukturelement (21, 24, 26 - 28) zur Modifizierung der Teiltropfenverteilung und/oder der Teiltropfenbahnen relativ zur Flugbahn (12) des Tropfens (11) und/oder relativ zum Target (30) bewegt wird.

7. Dosierverfahren gemäß einem der vorhergehenden Ansprüche, bei dem die Teiltropfen an dem mindestens einen Strukturelement (21, 24, 26 - 28) elektrisch aufgeladen werden.

8. Dosierverfahren gemäß einem der vorhergehenden Ansprüche, bei dem der Tropfen (11) eine Lösung oder Suspension umfasst, die biologische Materialien, wie z. B. Zellen, Zellbestandteile oder Makromoleküle, und/oder chemische Reaktanden, wie z. B. gelöste Polymere oder Salze, enthält.

9. Dosierverfahren gemäß einem der vorhergehenden Ansprüche, bei dem das Target (30) einen Objektträger, eine Kultivierungsplatte, ein Substrat für Zelluntersuchungen oder ein fluidisches Mikrosystem umfasst.

10. Dosiereinrichtung (100) zur Mikrodosierung fluider Medien, mit einem Tropfengenerator (10), der zur Erzeugung von mindestens einem Tropfen (11) eingerichtet ist, und mit einer Maskierungseinrichtung (20) mit mindestens einem Strukturelement (21,24, 26-28), das mindestens eine Randkante (22) aufweist,
**dadurch gekennzeichnet, dass**
der Tropfengenerator (10) zur Bewegung des Tropfens (11) auf einer vorbestimmten freien Flugbahn (12) eingerichtet ist, und
die mindestens eine Randkante (22) in die Flugbahn (12) des Tropfens (11) ragt.

11. Dosiereinrichtung gemäß Anspruch 10, bei der das Strukturelement durch eine Loch- oder Gittermaske (24 - 28) gebildet wird.

12. Dosiereinrichtung gemäß Anspruch 10, bei der das Strukturelement eben oder gewölbt ausgebildet ist.

13. Dosiereinrichtung gemäß einem der Ansprüche 10 bis 12, bei der in Bewegungsrichtung der Tropfen aufeinander folgend mehrere Strukturelemente (26 - 28) vorgesehen sind.

14. Dosiereinrichtung gemäß einem der Ansprüche 10 bis 13, bei der das Strukturelement (24) zumindest teilweise mit einer Zusatzsubstanz (60) beladen ist.

15. Verwendung eines Dosierverfahrens gemäß einem der Ausprüche 1 bis 9 oder einer Dosiereinrichtung gemäß einem der Ausprüche 10 bis 14 zur Verteilung von tropfenförmigen Proben auf Substraten oder in Mikrosystemen zur Anwendung in der Biomedizin und Biotechnologie, zur Modifizierung von Substratoberflächen oder zur Modifizierung der Tropfeneigenschaften von Tintenstrahldruckern.

## Claims

1. Dosing method for microdosing fluid media, in which at least one drop (11) is generated using a drop generator (10) and moved on a free flight path (12) which is directed toward a target (30), the drop striking a masking device (20) having at least one structure element (21-28) which has an edge (22),
**characterised in that**
the drop (11) is moved by the drop generator (10) on a predetermined flight path (12), and
the at least one partial drop (13, 15-18) is detached due to a collision of the drop (11) with the edge (22) and the at least one partial drop is transferred to the target (30).

2. Dosing method according to claim 1, wherein, using the masking device (20), there is a deflection of the at least one partial drop (13, 15-18) in relation to the original flight path (12) of the drop (11).

3. Dosing method according to claim 1 or 2, wherein, using the masking device (20), the material composition of the at least one partial drop (13, 15-18) is changed in relation to the composition of the drop due to the absorption of an additional substance (60) on the structure element (24) of the masking device (20).

4. Dosing method according to one of the preceding claims, wherein a perforated or lattice mask is used as the structure element (24, 26-28) and the drop (11) is divided into a multitude of partial drops (15-18).

5. Dosing method according to one of the preceding claims, wherein a plurality of structure elements (26-28) of at least one masking device (20) is arranged in the movement direction of the drop.

6. Dosing method according to one of the preceding claims, wherein the at least one structure element (21, 24, 26-28) is moved in relation to the flight path (12) of the drop (11) and/or in relation to the target (30) to modify the partial drop distribution and/or the partial drop paths.

7. Dosing method according to one of the preceding claims, wherein the partial drops on the at least one structure element (21, 24, 26-28) are electrically charged.

8. Dosing method according to one of the preceding claims, wherein the drop (11) comprises a solution or suspension which contains biological materials such as cells, cell components or macromolecules for example, and/or chemical reactants such as dissolved polymers or salts for example.

9. Dosing method according to one of the preceding claims, wherein the target (30) includes a microscope slide, a cultivation plate, a substrate for cell assays or a fluidic microsystem.

10. Dosing device (100) for microdosing fluid media, having a drop generator (10), which is set up to generate at least one drop (11), and having a masking device (20) comprising at least one structure element (21, 24, 26-28) which has at least one edge (22),
**characterised in that**
the drop generator (10) is set up to move the drop (11) on a predetermined free flight path (12), and
the at least one edge (22) protrudes into the flight path (12) of the drop (11).

11. Dosing device according to claim 10, wherein the structure element is formed by a perforated or lattice mask (24-28).

12. Dosing device according to claim 10, wherein the structure element is designed flat or curved.

13. Dosing device according to one of claims 10 to 12, wherein a plurality of structure elements (26-28) is provided following one another in the movement direction of the drops.

14. Dosing device according to one of claims 10 to 13, wherein the structure element (24) is at least partially loaded with an additional substance (60).

15. Use of a dosing method according to one of claims 1 to 9 or of a dosing device according to one of claims 10 to 14, for distributing samples in drops on substrates or in microsystems for use in biomedicine and biotechnology, for modifying substrate surfaces or for modifying the drop properties of inkjet printers.

## Revendications

1. Procédé de dosage pour le microdosage d'agents fluides, au cours duquel au moins une goutte (11) est générée avec un générateur de gouttes (10) et déplacée sur une trajectoire libre (12), qui est orientée vers une cible (30), la goutte (11) étant incidente sur un dispositif de séquestration (20) avec au moins un élément de structure (21 à 28), qui comporte une arête marginale (22),
**caractérisé en ce que**
la goutte (11) est déplacée par le générateur de goutte (10) sur une trajectoire prédéfinie (12) et par une collision de la goutte (11) sur l'arête marginale (22), au moins une goutte partielle (13, 15 à 18) se détache et au moins la goutte partielle est transférée sur la cible (30).

2. Procédé de dosage selon la revendication 1, au cours duquel au moins la goutte partielle (13, 15 à 18) est déviée par rapport à la trajectoire initiale (12) de la goutte (11) par le dispositif de séquestration (20).

3. Procédé de dosage selon la revendication 1 ou 2, au cours duquel, avec le dispositif de séquestration (20), la composition matérielle d'au moins la goutte partielle (13, 15 à 18) est modifiée par rapport à la composition de la goutte, par captage d'une substance supplémentaire (60) sur l'élément de structure (24) du dispositif de séquestration (20).

4. Procédé de dosage selon l'une quelconque des revendications précédentes, au cours duquel l'élément de structure (24, 26 à 28) utilisé est un masque perforé ou un masque quadrillé et la goutte (11) est divisée en une pluralité de gouttes partielles (15 à 18).

5. Procédé de dosage selon l'une quelconque des revendications précédentes, pour lequel plusieurs éléments de structure (26 à 28) d'au moins un dispositif de séquestration (20) sont disposés dans le sens de déplacement de la goutte.

6. Procédé de dosage selon l'une quelconque des revendications précédentes, au cours duquel, pour modifier la distribution des gouttes partielles et/ou des trajectoires des gouttes partielles, au moins l'élément de structure (21, 24, 26 à 28) est déplacé par rapport à la trajectoire (12) de la goutte et/ou par rapport à la cible (30).

7. Procédé de dosage selon l'une quelconque des revendications précédentes, au cours duquel les gouttes partielles sont chargées en électricité sur au moins l'élément de structure (21, 24, 26 à 28).

8. Procédé de dosage selon l'une quelconque des revendications précédentes, dans lequel la goutte (11) comprend une solution ou une suspension contenant des matériaux biologiques, comme par exemple des cellules, des éléments de cellules ou des macromolécules et/ou des réactifs chimiques, comme par exemple des polymères dissous ou des sels.

9. Procédé de dosage selon l'une quelconque des revendications précédentes, dans lequel la cible (30) comprend un support d'objet, une lame de culture, un substrat pour les analyses de cellules ou un microsystème fluide.

10. Dispositif de dosage (100) pour le microdosage d'agents fluides, avec un générateur de gouttes (10), qui est conçu pour créer au moins une goutte (11), et avec un dispositif de séquestration (20) avec au moins un élément de structure (21, 24, 26 à 28), qui comporte au moins une arête marginale (22),
**caractérisé en ce que** le générateur de gouttes (10) est conçu pour déplacer la goutte (11) sur une trajectoire libre prédéfinie (12) et
**en ce que** au moins l'arête marginale (22) saillit dans la trajectoire (12) de la goutte (11).

11. Dispositif de dosage selon la revendication 10, sur lequel l'élément de structure est formé par un masque perforé ou par un masque quadrillé (24 à 28).

12. Dispositif de dosage selon la revendication 10, sur lequel l'élément de structure est conçu de façon plane ou bombée.

13. Dispositif de dosage selon l'une quelconque des revendications 10 à 12, sur lequel on a prévu plusieurs éléments de structure (26 à 28) successifs dans le sens de déplacement des gouttes.

14. Dispositif de dosage selon l'une quelconque des revendications 10 à 13, sur lequel l'élément de structure (24) est au moins partiellement chargé d'une substance supplémentaire (60).

15. Utilisation d'un procédé de dosage selon l'une quelconque des revendications 1 à 9 ou d'un dispositif de dosage selon l'une quelconque des revendications 10 à 14, pour distribuer des échantillons sous forme de gouttes sur des substrats ou dans des microsystèmes pour leur utilisation en médecine biologique ou en biotechnologie, pour la modification de surfaces de substrats ou pour la modification des caractéristiques des gouttes d'imprimantes à jet d'encre.
